# EUROPEAN PATENT APPLICATION

(11) **EP 2 618 340 A1**
(43) Date of publication of application: **24.07.2013**
(21) Application number: 12151940.9
(22) Date of filing: 20.01.2012
(51) Int. Cl.: H01B 13/06, H01B 19/04

(54) **Method for impregnating an insulating material applied to a conductor with a resin**

(71) Applicant: Alstom Technology Ltd, 5400 Baden (CH)
(72) Inventor: Novosel, Damir, 5103 Möriken (CH); Safari Zadeh, Hossein, 5504 Othmarsingen (CH)

(57) **Abstract**

The method for impregnating with a resin (9, 10) an insulating material (3, 5) applied to a conductor (2) comprises supplying the conductor (2) with an intermittent current (12) during impregnation for it to generate a variable magnetic field. The conductor (2) comprises a plurality of transposed strands (4), and/or it is immersed in an external magnetic field, and/or it faces a ferromagnetic element (15).

## Description

### TECHNICAL FIELD

The present disclosure relates to a method for impregnating an insulating material applied to a conductor.

For example the method can be used during manufacturing of insulated conductors to be used in rotating electric machines such as electric generators or electric motors (stator bars). It is anyhow clear that the method can be used to manufacture any other kind of insulated conductors.

### BACKGROUND

It is known to manufacture insulated conductors (stator bars) by providing an insulating material (for example a mica tape) around a conductor and impregnating it with a resin that is then cured; this way a so-called main insulation is usually manufactured.

Often the conductor is a transposed conductor, i.e. it includes a plurality of strands slightly insulated from one another with insulating material (for example fiber-glass) applied to each of the strands; during manufacturing also this insulating material has to be impregnated with the resin that is then cured; this way an internal insulation is manufactured.

Impregnation should be from one side fast, because the resin properties degrade over time, and from another side it should be slow, to allow a proper impregnation of the insulating material.

In order to cope with these requirements, traditionally the resin viscosity and the vacuum/overpressure during impregnation are controlled.

Anyhow the inventors have found that there is still space for improvement of the impregnation process.

### SUMMARY

An aspect of the disclosure includes providing a method by which impregnation is improved.

Another aspect of the disclosure includes providing a method that allows a fast impregnation but avoids or limits the drawbacks of the impregnation speed.

These and further aspects are attained by providing a method in accordance with the accompanying claims.

### BRIEF DESCRIPTION OF THE DRAWINGS

Further characteristics and advantages will be more apparent from the description of a preferred but non-exclusive embodiment of the method illustrated by way of non-limiting example in the accompanying drawings, in which:

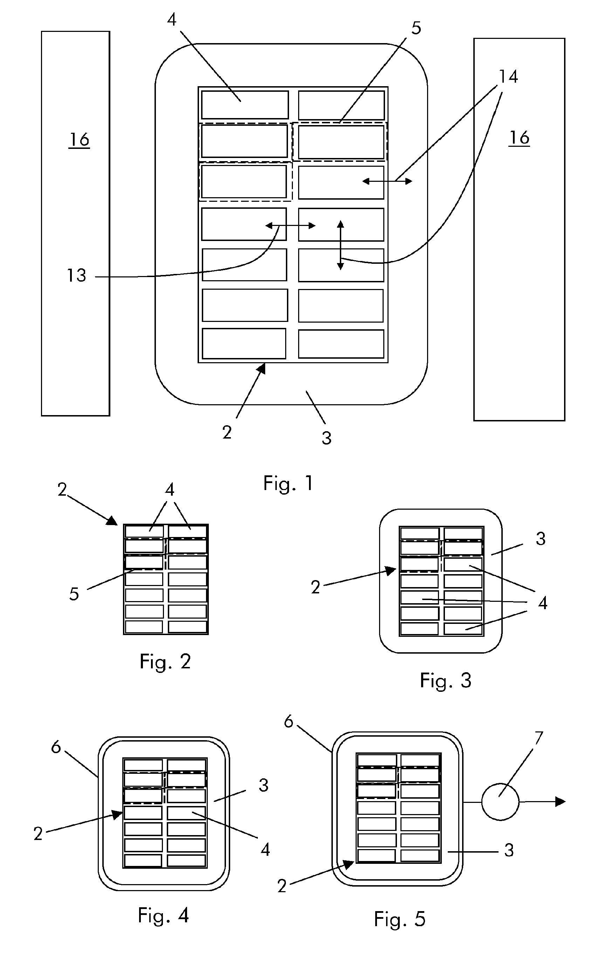

Figure 1 is a schematic view of a conductor;

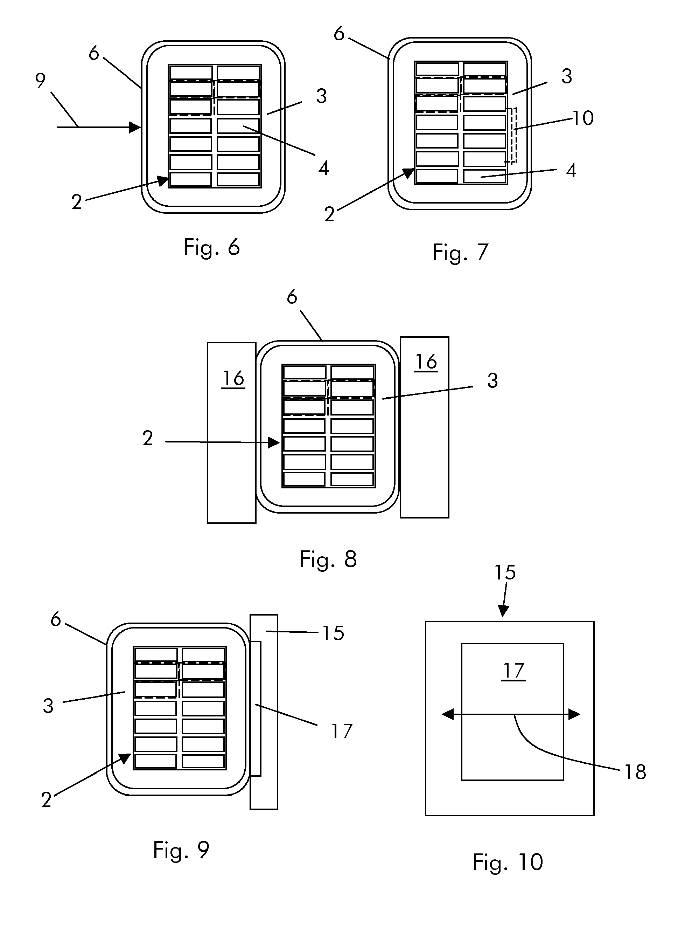

Figures 2 through 13 show an embodiment with some alternative possibilities of method;
Figures 14, 15 show the relationship between displacement, current and external magnetic field (only for figure 15); and
Figures 16-19 show examples of the current provided to the conductor and/or strands.

### DETAILED DESCRIPTION OF EXEMPLARY EMBODIMENTS

In order to manufacture an insulated conductor 1 (such as a stator bar), a conductor 2 and an insulating material 3 applied to the conductor 2 are provided. The conductor 2 can be a solid conductor, such as a copper bar made in one element, or a transposed conductor, such as a conductor made of a plurality of transposed strands 4 (for example copper strands) insulated with an insulating material 5 from one another.

The insulating material 3 can be a mica tape wrapped around the conductor 2 in one or more layers and the insulating material 5 can be a fiber-glass that covers each strand 4 in one or more layers.

Then an envelope 6 is provided around the conductor 2 wrapped with the insulation 3, and a vacuum is made in the envelope 6. In this respect a vacuum pump 7 can be provided, to reach an under pressure inside of the envelope 6.

The resin can be injected into the envelope 6 (reference 9 indicates the injected resin); in this case the resin can be injected at high or low pressure, or it can be sucked (vacuum). It is anyhow clear that injection can occur at any pressure that allows injection and impregnation.

Alternatively, the resin can be included in the insulating material 3 (that is applied to the conductor 2) and/or to the insulating material 5 (that is applied to the strands 4); reference 10 indicates the resin (for example a B stage resin) included in the insulating material 3 and/or 5. For example tapes known as Resin Rich tapes can be used; these tapes have a mica layer bounded to a resin layer, such that during impregnation the resin layer melts and impregnates the mica layer.

After impregnation the resin is cured (reference 11 indicated heat) to realise the insulation and the insulated bar 1.

During impregnation the conductor 2 is supplied with an intermittent current 12 (pulse current), for the intermittent current 12 to generate an intermittent magnetic field.

This way, when the conductor 2 comprises a plurality of transposed strands 4, each strand 4 generates a magnetic field when the current 12 passes through it, but the magnetic field is extinguished when no current passes through the strands anymore.

The magnetic fields causes forces between the strands that in turn generate displacements 13 of the strands.

For example, switch-on of the current can cause strands mutual attraction and switch-off can let the strands bounce back to their original positions.

Since the current 12 is an intermittent current and thus the displacements 13 are also intermittent displacements, the strands 4 and conductors 2 start to vibrate.

This vibration improves impregnation of both insulating materials 3 and 5, because the friction reduction by vibration proved to be an effective method to enhance the flowing of viscous fluids, like epoxy resins that is usually used to impregnate the insulating material 3, 5.

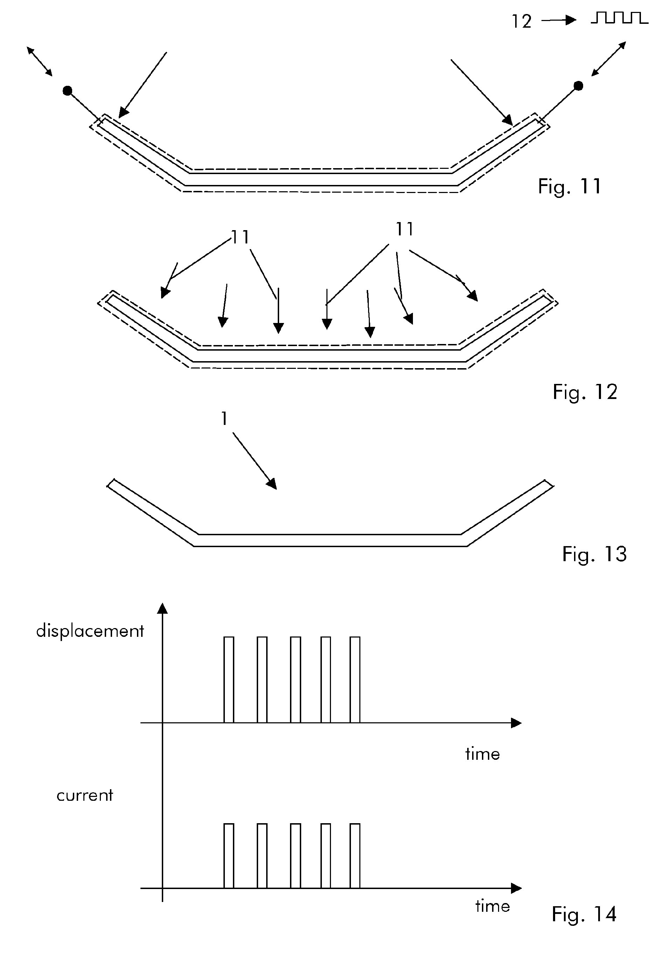

For example, figure 14 shows the relationship between the intermittent current and the displacement of the strands 4.

The conductor 2 can also be immersed in an external magnetic field.

In this way the flexibility can be improved, because the external magnetic field can have the same or opposite polarity as the magnetic field generated by the strands 4 (i.e. by the conductor 2) or is can be extinguished. Naturally, the same effect can be achieved by changing the current of the current 12 (to change the polarity of the magnetic field of the conductor 2 and/or strands 4).

For example reference 14 indicates the displacement generated by the interaction with the external magnetic field.

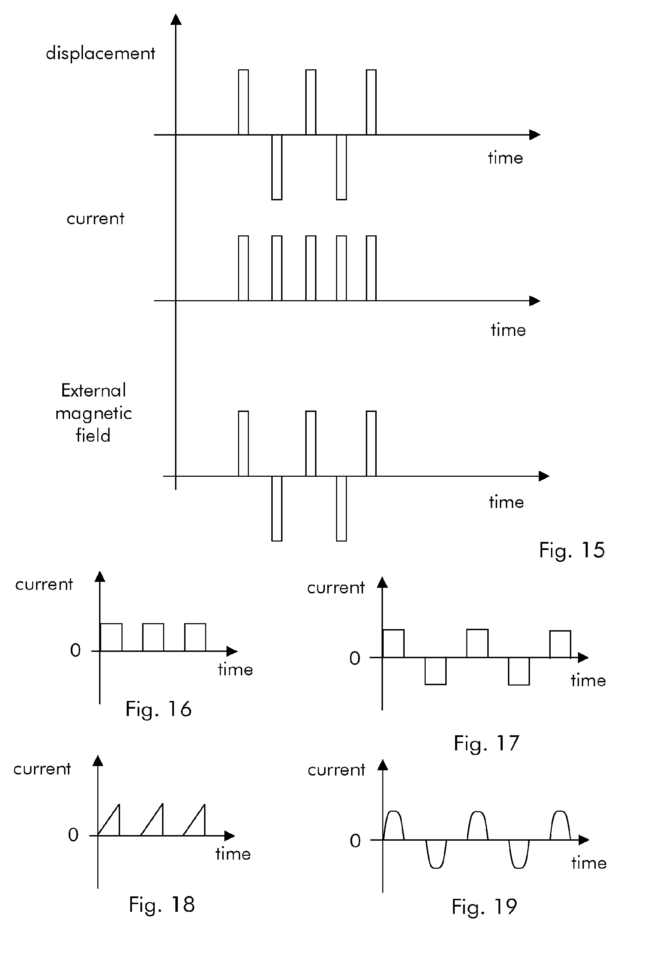

Also in this case, figure 15 shows an example of the relationship between the intermittent current, the displacement of the strands 4 and/or conductor 2 and the external magnetic field.

The conductor 2 can also at least partially face one or more ferromagnetic elements 15.

Also in this case the effect is the one already described before, because the ferromagnetic element generates attraction between the strands 4 (and thus conductor 2) and the ferromagnetic material 15 itself when the intermittent current 12 passes through the conductor 2, and no attraction when no intermittent current 12 passes through the conductor 2.

The possibilities above described are based on the same concept, being generating forces between the strands 4 and/or conductor 2 either internal or external to cause vibration of the strands 4 and/or of the conductor 2 to improve impregnation.

It is also clear that the different possibilities above described to cause vibration can be used independently from one another or can be used together (for example two or more of them can be used at the same time).

The amplitude and/or frequency and/or shape (waveform) of the intermittent current 12 is preferably regulated; this lets the vibration of the strands 4 and conductor 2 be regulated.

For example, the intermittent current 12 can be regulated such that it has a frequency corresponding to a resonance frequency for the conductor 2 or at least a strand 4. The resonance frequency need not necessarily be the first resonance frequency, but is can also be a subsequent resonance frequency to improve impregnation of specific parts of the conductor 2 and/or strands 4.

The resonance frequency of the conductor 2 and/or bars 4 can vary over time, for example because of changes in working conditions. In this case a steady-matched resonance technique can be used. The steady matched resonance technique allows a matching of the current 12 with the resonance frequencies by feedback of signals; this allows a reduction of the dissipation (excessive heat generation in the conductors) and an increase of the vibration amplitude.

In addition, the external magnetic field and/or the magnetic field generated by the conductor 2 can have a variable polarity and/or amplitude over the conductor length and/or over time. This can help impregnation because it allows large flexibility of the intensity and application zones of the forces applied to the conductor 2.

The external magnetic field is preferably generated by at least a magnet 16; in different examples:
- one magnet can be provided at one or more sides of the conductor 2,
- the magnet or magnets can rest against the envelope 6 or not,
- a plurality of magnets can be provided at one or more sides of the conductor 2 (adjacent one to the other or not);
- the magnet or magnets can be moved, for example according to a back and forth movement parallel to the conductor; in this case the magnet can either be a permanent or an electric magnet.

The magnet or magnets 16 can either be a permanent magnet or an electric magnet; naturally also combinations of permanent and electric magnets are possible.

In addition, if two or more conductors 2 are impregnated one beside the other, each of them can work as an electric magnet for the adjacent conductors.

When the ferromagnetic element is provided, it can:
- rest on the envelope 6;
- be provided at a first side of the conductor and no ferromagnetic element is provided at a side opposite the first side;
- can extend over the whole length of the conductor 2 or only a part thereof;
- can have recesses 17 or be shaped such that its influence on the conductor 2 changes over its length;
- can be moved, for example according to a back and forth movement parallel to the conductor (arrow 18).

Naturally the features described may be independently provided from one another.

Advantageously the resonance between the strands (micro resonance) and the resonance alongside the stator bar due to mutual interaction with an external field (macro resonance) allow a faster and better impregnation than in traditional methods and systems.

In practice the materials used and the dimensions can be chosen at will according to requirements and to the state of the art.

### REFERENCE NUMBERS

- 1: insulated conductor
- 2: conductor
- 3: insulating material (mica tape)
- 4: strand
- 5: insulating material (fiber-glass)
- 6: envelope
- 7: vacuum pump
- 9: injected resin
- 10: resin included in the insulated material
- 11: heat
- 12: intermittent current
- 13: displacement
- 14: displacement
- 15: ferromagnetic element
- 16: magnet
- 17: recess
- 18: movement

## Claims

1. A method for impregnating with a resin (9, 10) an insulating material (3, 5) applied to a conductor (2), **characterised by** supplying the conductor (2) with an intermittent current (12) during impregnation for it to generate a variable magnetic field, wherein:
the conductor (2) comprises a plurality of transposed strands (4), and/or
the conductor (2) is immersed in an external magnetic field, and/or
the conductor (2) at least partially faces a ferromagnetic element (15).

2. The method of claim 1, **characterised by** regulating the amplitude and/or frequency and/or shape of the intermittent current (12).

3. The method of claim 1, **characterised in that** the intermittent current (12) has a frequency corresponding to a resonance frequency for the conductor (12) or at least a strand (4).

4. The method of claim 3, **characterised in that** the intermittent current (12) is matched with resonance frequency of the conductor (2) and/or strands (4) by a steady-matched resonance technique.

5. The method of claim 1, **characterised in that** the external magnetic field has a variable polarity and/or amplitude over the conductor length and/or over time.

6. The method of claim 1, **characterised in that** the variable magnetic field generated by the conductor (2) has a variable polarity and/or amplitude over the conductor length and/or over time.

7. The method of claim 1, **characterised in that** the external magnetic field is generated by at least a magnet (16).

8. The method of claim 7, **characterised in that** the at least a magnet (16) is a permanent magnet.

9. The method of claim 7, **characterised in that** the at least a magnet (16) is an electric magnet.

10. The method of claim 1, **characterised in that** the ferromagnetic element (15) is provided at a first side of the conductor (2).

11. The method of claim 10, **characterised in that** no ferromagnetic element is provided at a side opposite the first side.

12. The method of claim 1, **characterised in that** before impregnation the following steps are carried out:
providing the conductor (2) with insulation (3, 5) applied to it
providing an envelope (6) around the conductor (2) with the insulation (3, 5)
making a vacuum in the envelope (6).

13. The method of claim 12, **characterised in that** the resin is injected into the envelope (6).

14. The method of claim 12, **characterised in that** the resin is included in the insulating material (3, 5).

15. The method of claim 1, **characterised in that** after impregnation the resin is cured.
